# EUROPÄISCHE PATENTSCHRIFT

(11) **EP 1 971 479 B1**
(45) Veröffentlichungstag und Bekanntmachung des Hinweises auf die Patenterteilung: **23.12.2009**
(21) Anmeldenummer: 07711121.9
(22) Anmeldetag: 09.01.2007
(51) Int. Cl.: B29D 30/06

(54) **VORRICHTUNG ZUR NACHBEHANDLUNG VON REIFEN**
DEVICE FOR POST-TREATING TYRES
DISPOSITIF POUR RÉALISER UN POST-TRAITEMENT DE PNEUMATIQUES

(30) Priorität: 10.01.2006 DE 102006001418
(43) Veröffentlichungstag der Anmeldung: 24.09.2008
(73) Patentinhaber: Harburg-Freudenberger Maschinenbau GmbH, 21079 Hamburg (DE)
(72) Erfinder: MILITZER, Jeannette, 22587 Hamburg (DE); BAHLKE, Stefan, 29493 Schnakenburg (DE); MEINCKE, Rüdiger, 22547 Hamburg (DE); ENOCH, Horst, 21075 Hamburg (DE)
(74) Vertreter: Klickow, Hans-Henning
(86) Internationale Anmeldenummer: PCT/DE2007/000023
(87) Internationale Veröffentlichungsnummer: WO 2007/079723

(56) Entgegenhaltungen:
- EP-A1- 1 568 475
- EP-A2- 0 143 538
- US-A- 3 792 145

## Beschreibung

Die Erfindung betrifft eine Vorrichtung mit einer Aufnahmeeinrichtung zur Nachbehandlung von Reifen, die im Anschluß an eine Vulkanisation ihres elastomeren Materials von Stützgas mit einem Innendruck beaufschlagt und abgefühlt werden, bei der die Aufnahmeeinrichtung zur Halterung der Reifen und zur Abdichtung eines Reifeninnenraumes ausgebildet und mit einer Druckgasversorgung verbunden ist, sowie bei der die Aufnahmeeinrichtung mindestens zwei ortsfest angeordnete Aufnahmebereiche für mindestens zwei Reifen aufweist und daß mindestens eine Eingabe der Reifen unter verwendung einer positionierbaren Handhabungseinrichtung erfolgt.

Bei bekannten derartigen Vorrichtungen besitzt die Vorrichtung mindestens zwei Aufnahmeeinrichtungen, die relativ zu einer Drehachse verschwenkbar angeordnet sind.

Hierdurch werden mehrere Nachbehandlungsplätze bereitgestellt und gleichzeitig eine Beladung an einem stets gleichen Ort ermöglicht.

Aus der Gattungsbildenden US-A-3,792,145 ist bereits eine Vorrichtung zur Aufnahme und Nachbehandlung von Reifen bekannt. Die Aufnahmeeinrichtung ist zur Halterung der Reifen und zur Abdichtung eines Reifeninnenraumes ausgebildet. Zur Beaufschlagung des Reifens durch Stützgas mit einem Innendruck ist eine Druckgasversorgung verwendet. Die Aufnahmeeinrichtung weist mindestens zwei ortsfest angeordnete Aufnahmebereiche für mindestens zwei Reifen auf. Eine Eingabe der Reifen erfolgt unter Verwendung einer positionierbaren Handhabungseinrichtung.

In der EP-A-1 568 475 wird ebenfalls eine ähnliche Vorrichtung zur Aufnahme und Nachbehandlung von Reifen beschrieben. Auch hier ist eine entsprechende Stützgaszufuhr vorgesehen.

In der EP-0 143 538 wird eine weitere Vorrichtung zur Aufnahme und Nachbehandlung von Reifen erläutert.

Aufgabe der vorliegenden Erfindung ist es, eine Vorrichtung der einleitend genannten Art derart zu konstruieren, daß eine preiswertere Fertigung der Vorrichtung unterstützt wird.

Diese Aufgabe wird erfindungsgemäß dadurch gelöst, daß die mindestens zwei Aufnahmebereiche in lotrechter Richtung übereinander angeordnet sind.

Insbesondere ist erfindungsgemäß vorgesehen, daß mindestens zwei Aufnahmebereiche der Vorrichtung stationär angeordnet sind und daß eine Eingabe der nachzubehandelnden Reifen unter Verwendung einer geeignet positionierbaren Handhabungseinrichtung erfolgt.

Eine kompakte Anordnung wird dadurch unterstützt, daß die mindestens zwei Aufnahmebereiche in lotrechter Richtung übereinander angeordnet sind.

Eine weitere Modularisierung kann dadurch erfolgen, daß die mindestens zwei Aufnahmebereiche in horizontaler Richtung nebeneinander angeordnet sind.

Zur Bereitstellung ausreichend großer Spannkräfte ist vorgesehen, daß Halteelemente für den Reifen hydraulisch gegeneinander verspannbar ist.

Eine einfache Konstruktion wird dadurch unterstützt, daß die Aufnahmeeinrichtung nur von einer Seite beladen und entladen wird.

Zur Verminderung der Anzahl der erforderlichen Bauelemente wird vorgeschlagen, daß sowohl das Beladen als auch das Entladen mit einem modifizierten Pressenentlader durchgeführt wird.

Eine Anpassung an eine jeweils vorliegende Reifengeometrie erfolgt dadurch, daß die Halteelemente als Felgenteller ausgebildet sind.

Eine Minimierung der Anzahl der beweglichen Bauelemente wird dadurch erreicht, daß eines der Halteelemente ortsfest und das andere positionierbar angeordnet ist.

Ein geringer Abdichtungsaufwand wird dadurch unterstützt, daß eine Druckgaszufuhr zu einem Innenraum des Reifens durch das ortsfest angeordnete Halteelement hindurch erfolgt.

Eine Abdichtung des Reifeninnenraumes wird dadurch unterstützt, daß der Reifen in einem ersten Prozeßschritt über eine ventilanordnung mit einem Vorspanndruck beaufschlagbar ist.

Zur Durchführung des eigentlichen Kühlvorganges ist vorgesehen, daß der Reifen in einem zweiten Prozeßschritt über eine Ventilanordnung mit einem Hauptdruck beaufschlagbar ist.

In den Zeichnungen sind Ausführungsbeispiele der Erfindung dargestellt. Es zeigen:
- Fig. 1: eine schematische Seitenansicht einer Vorrichtung mit vier Aufnahmebereichen für nachzubehandelnde Reifen,
- Fig. 2: eine schematische Darstellung des hydraulischen Schaltplanes,
- Fig. 3: eine Seitenansicht einer neben einer Reifenheizpresse und einer Handhabungseinrichtung angeordneten Vorrichtung zur Nachbehandlung von Reifen,
- Fig. 4: eine Draufsicht auf die Anordnung in Fig. 3 gemäß Blickrichtung IV in Fig. 3 und
- Fig. 5: eine detailliertere Darstellung der Anordnung gemäß Fig. 1.

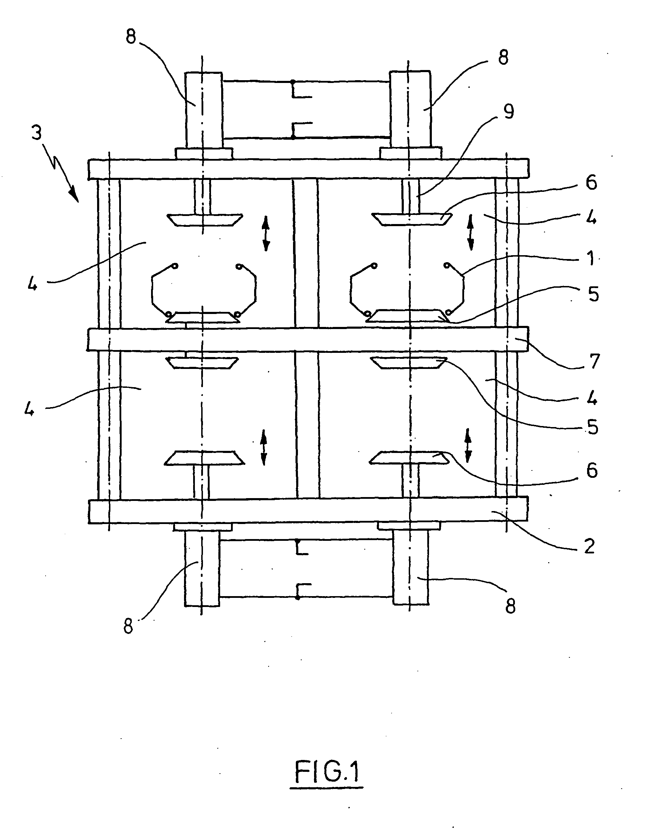

Fig. 1 zeigt eine Vorrichtung zur Nachbehandlung von Reifen (1), bei der im Bereich eines Maschinengestelles (2) eine Aufnahmeeinrichtung für die Reifen (1) angeordnet ist. Die Aufnahmeeinrichtung (3) ist beim dargestellten Ausführungsbeispiel mit vier Aufnahmebereichen (4) für die Reifen (1) versehen. Gemäß Fig. 1 sind jeweils zwei Aufnahmebereiche (4) nebeneinander und übereinander angeordnet, so daß eine rechteckförmige Grundstruktur der Aufnahmeeinrichtung (3) bereitgestellt ist.

Im Bereich jedes der Aufnahmebereiche (4) sind erste und zweite Felgenteller (5, 6) angeordnet. Die ersten Felgenteller (5) sind jeweils starr mit einer ortsfest angeordneten Traverse (7) verbunden. Die zweiten Felgenteller (6) sind relativ zum Maschinengestell (2) positionierbar angeordnet. Zur Positionierung der Felgenteller (6) sind Hydraulikzylinder (8) verwendet, an deren Stempel (9) die zweiten Felgenteller (6) befestigt sind. Eine symmetrische Konstruktion wird dadurch unterstützt, daß sich die Hydraulikzylinder (8) jeweils paarweise in einander entgegengesetzte Richtungen erstrecken.

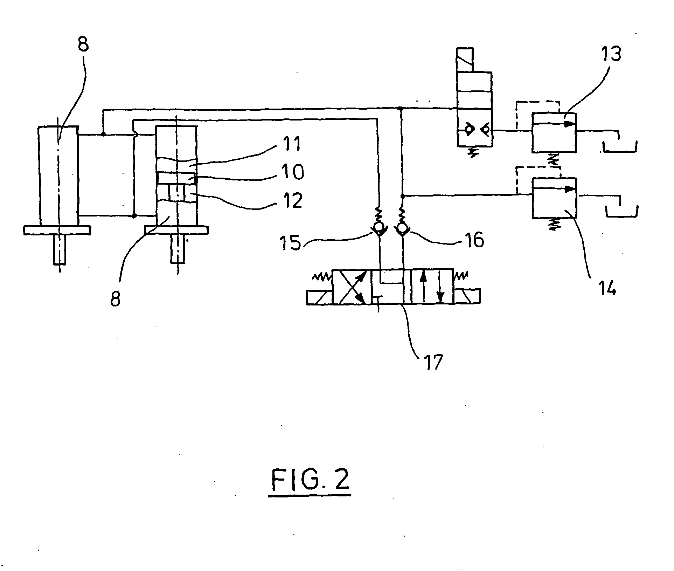

Fig. 2 zeigt einen hydraulischen Schaltplan zur Druckversorgung der Hydraulikzylinder (8). Im teilweise geschnitten dargestellten Hydraulikzylinder (8) ist zu erkennen, daß der Stempel (9) mit einem Kolben (10) gekoppelt ist. Der Kolben (10) unterteilt einen Innenraum des Hydraulikzylinders (8) in einen oberen Steuerraum (11) und einen unteren Steuerraum (12). Beide Steuerräume (11, 12) können aktiv mit einem Steuerdruck beaufschlagt werden, so daß der Kolben (10) aktiv sowohl vorwärts als auch rückwärts positionierbar ist. Die oberen Steuerräume (11) sind an eine ventilanordnung (13) zur Bereitstellung eines Vorspanndruckes angeschlossen. Darüber hinaus sind die oberen Steuerräume (11) auch von einer Ventilanordnung (14) zur Bereitstellung eines Hauptdruckes beaufschlagbar. Beide Steuerräume (11, 12) sind über Rückschlagventile (15, 16) mit mindestens einem Druckentlastungsventil (17) gekoppelt.

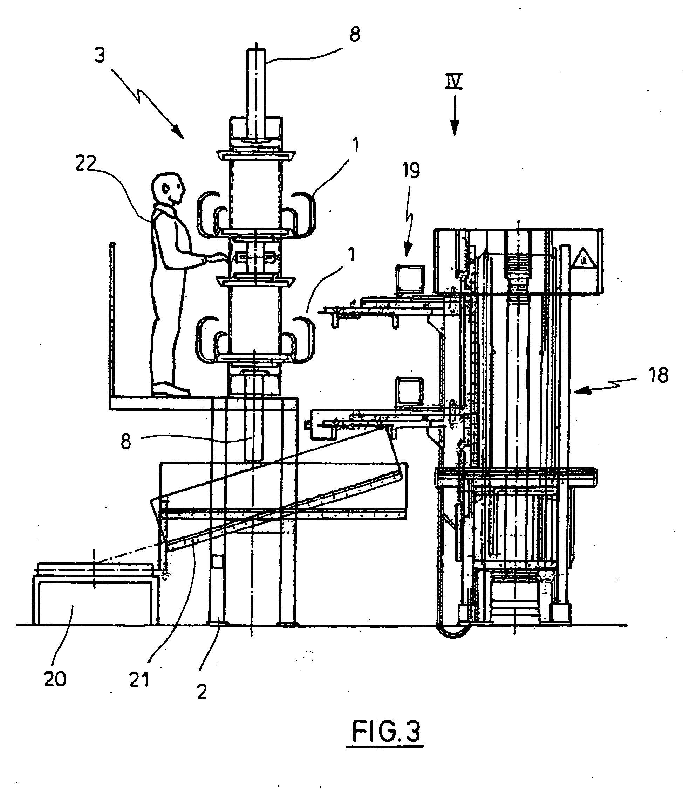

Fig. 3 zeigt in einer Seitenansicht eine Übersichtsdarstellung, bei der die Aufnahmeeinrichtung (3) seitlich neben einer Reifenheizpresse (18) angeordnet ist. Die Reifen (1) werden von einer Handhabungseinrichtung (19) von der Reifenheizpresse (18) zur Aufnahmeeinrichtung (3) transportiert und in die Aufnahmeeinrichtung (3) eingesetzt. Ausreichend im Bereich der Aufnahmeeinrichtung (3) abgekühlte Reifen werden von der Handhabungseinrichtung (19) wieder aus der Aufnahmeeinrichtung (3) entnommen und an eine Abfördervorrichtung (20) übergeben. Beim dargestellten Ausführungsbeispiel erfolgt dies unter Zwischenschaltung einer Transportstrecke (21).

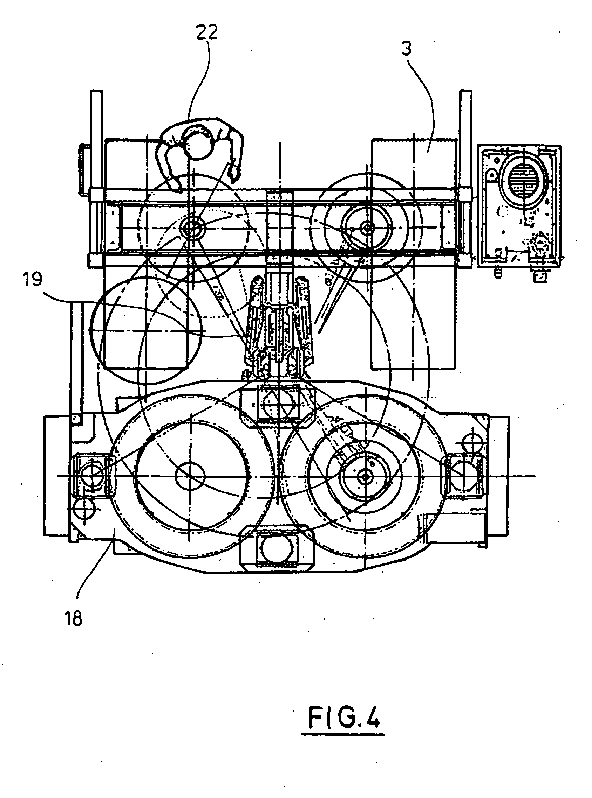

Fig. 4 zeigt eine Draufsicht auf die Anordnung gemäß Fig. 3. Die Größenrelationen werden durch einen eingezeichneten menschlichen Bediener (22) verdeutlicht.

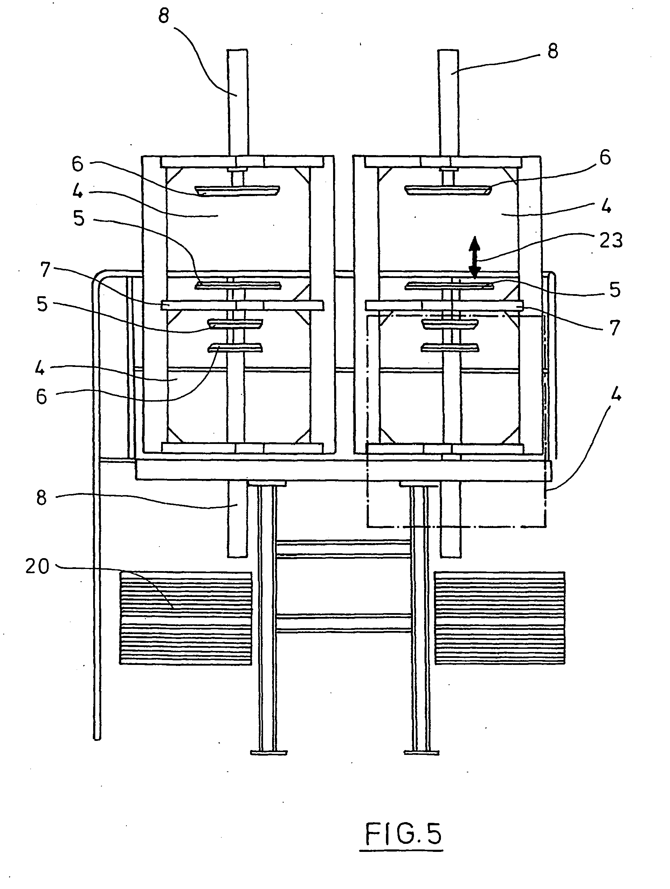

Fig. 5 zeigt die Anordnung gemäß Fig. 1 in einer stärker detaillierteren Darstellung. Ein in Fig. 5 nicht dargestellter Reifen (1) wird unter Verwendung der ebenfalls nicht dargestellten Handhabungseinrichtung (19) in den beiden oberen Aufnahmebereichen (4) auf den ersten Felgenteller (5) gelegt. Unter Verwendung des Hydraulikzylinders (8) wird anschließend der zweite Felgenteller (6) in Richtung auf den Reifen (1) gefahren und dichtet hierdurch gemeinsam mit dem ersten Felgenteller (5) einen Innenraum des Reifens (1) druckdicht ab.

Der Reifen (1) wird hierbei stärker zusammengedrückt, als seiner Nennbreite (23) entspricht. Hierdurch wird eine sichere Abdichtung gewährleistet. In diesem Betriebszustand erzeugt der Hydraulikzylinder (8) unter Verwendung der in Fig. 2 veranschaulichten Ventilanordnung (13) einen Vorspanndruck P1.

Nach der oben beschriebenen Abdichtung des Innenraumes des Reifens (1) wird durch die Traverse (7) und den ersten Felgenteller (5) hindurch das erforderliche Druckgas, in der Regel Druckluft, in den Reifen (1) eingeleitet. Aufgrund eines anschließenden Anstieges des Innendruckes im Bereich des Reifens (1) wird entgegen des Vorspanndruckes P1 des Hydraulikzylinders (8) der zweite Felgenteller (6) zurückgeschoben, bis der Reifen (1) auf seine Nennbreite (23) expandiert ist. Nach Erreichen dieser Nennbreite (23) wird unter Verwendung der in Fig. 2 veranschaulichten Ventilanordnung (14) der hydraulische Zylinder (8) mit einem hydraulischen Druck P2 beaufschlagt und in dieser Position gehalten. Eine Positionserfassung für die aktuelle Breite des Reifens (1) und insbesondere zur Erfassung eines Erreichens der Nennbreite (23) kann über Schalter oder Wegmeßsysteme erfolgen. Der Druck P2 ist größer als der Druck P1

Die in Fig. 5 dargestellte Anordnung mit vier Aufnahmeeinrichtungen (3) ist dafür geeignet, eine Nachbehandlungskapazität für eine übliche Doppelheizpresse bereitzustellen. Nach einer ausreichenden Abkühlung der Reifen (1) im Bereich der Aufnahmeeinrichtung (3) wird zunächst der Innendruck aus dem Reifen (1) abgelassen und anschließend der Stempel (9) des Hydraulikzylinders (8) mit dem zweiten Felgenteller (6) zurückgefahren. Die Handhabungseinrichtung (19) entnimmt dann den abgekühlten Reifen aus der Aufnahmeeinrichtung (3) und übergibt diesen an die Abfördereinrichtung (20).

Gemäß einer bevorzugten Ausführungsform ist auf einer Rückseite der Aufnahmeeinrichtung (3) eine Handhabungsfläche angeordnet, um einen Wechsel der Felgenteller (5, 6) sowie eine Lagerung aktuell nicht benötigter Felgenteller (5, 6) zu unterstützen.

Gemäß der Ausführungsform in Fig. 5 sind jeweils zwei Aufnahmebereiche (4) in lotrechter Richtung übereinander angeordnet und zu einem Funktionsmodul zusammengefaßt. Eine beliebige Anzahl derartiger Funktionsmodule kann zusammengefaßt werden, um eine benötigte Nachbehandlungskapazität bereitzustellen. Ebenfalls ist es möglich, die vier in Fig. 5 veranschaulichten Aufnahmebereiche (4) als ein Funktionsmodul zusammenzufassen und eine entsprechend benötigte Kapazität durch die Kombination derartiger Vierer-Module bereitzustellen.

Die Nachbehandlung der Reifen dient im wesentlichen der Abkühlung des Reifenmaterials bis zur Erreichung einer ausreichenden Formstabilität. Die Abkühlung erfolgt hierbei durch einen Wärmeübergang zur umgebenden Luft sowie zu den Felgentellern (5, 6). Die Abkühlung kann durch ein Anblasen mit Kühlluft unterstützt werden. Das während des Kühlvorganges in den Reifen (1) eingeleitete Druckgas dient im wesentlichen einer Abstützung des Reifens und somit einer Stabilisierung während des Abkühlvorganges. Hierdurch werden Verformungen vor Erreichen einer ausreichenden Formstabilität vermieden.

## Patentansprüche

1. Vorrichtung mit einer Aufnahmeeinrichtung (3) zur Nachbehandlung von Reifen (1), die im Anschluß an eine Vulkanisation ihres elastomeren Materials von Stützgas mit einem Innendruck beaufschlagt und abgekühlt werden, bei der die Aufnahmeeinrichtung (3) zur Halterung der Reifen (1) und zur Abdichtung eines Reifeninnenraumes ausgebildet und mit einer Druckgasversorgung verbunden ist, sowie bei der die Aufnahmeeinrichtung (3) mindestens zwei ortsfest angeordnete Aufnahmebereiche (4) für mindestens zwei Reifen (1) aufweist und daß mindestens eine Eingabe der Reifen (1) unter Verwendung einer positionierbaren Handhabungseinrichtung (19) erfolgt, **dadurch gekennzeichnet, daß** die mindestens zwei Aufnahmebereiche (4) in lotrechter Richtung übereinander angeordnet sind.

2. Vorrichtung nach Anspruch 1, **dadurch gekennzeichnet, daß** Halteelemente für den Reifen (1) hydraulisch gegeneinander verspannbar ist.

3. Vorrichtung nach einem der Ansprüche 1 oder 2, **dadurch gekennzeichnet, daß** die Aufnahmeeinrichtung (3) nur von einer Seite beladbar und entladbar ist.

4. Vorrichtung nach einem der Ansprüche 1 bis 3, **dadurch gekennzeichnet, daß** sowohl das Beladen als auch das Entladen mit einem modifizierten Pressenentlader durchgeführt wird.

5. Vorrichtung nach einem der Ansprüche 1 bis 4, **dadurch gekennzeichnet, daß** die Halteelemente als Felgenteller (5, 6) ausgebildet sind.

6. Vorrichtung nach einem der Ansprüche 1 bis 5, **dadurch gekennzeichnet, daß** eines der Halteelemente ortsfest und das andere positionierbar angeordnet ist.

7. Vorrichtung nach einem der Ansprüche 1 bis 6, **dadurch gekennzeichnet, daß** eine Druckgaszufuhr zu einem Innenraum des Reifens (1) durch das ortsfest angeordnete Halteelement hindurch erfolgt.

8. Vorrichtung nach einem der Ansprüche 1 bis 7, **dadurch gekennzeichnet, daß** der Reifen (1) in einem ersten Prozeßschritt über eine Ventilanordnung (13) mit einem Vorspanndruck beaufschlagbar ist.

9. Vorrichtung nach einem der Ansprüche 1 bis 7, **dadurch gekennzeichnet, daß** der Reifen (1) in einem zweiten Prozeßschritt über eine Ventilanordnung (14) mit einem Hauptdruck beaufschlagbar ist.

## Claims

1. Apparatus having a receiving device (3) for the posttreatment of tyres (1), which, following a vulcanisation of their elastomer material, are subjected to an internal pressure by supporting gas and cooled, the receiving device (3) being configured for holding the tyres (1) and for sealing a tyre interior and being connected to a compressed-gas supply, and the receiving device (3) having at least two stationarily arranged receiving areas (4) for at least two tyres (1), and at least an introduction of the tyres (1) taking place with the use of a positionable handling device (19), **characterised in that** the at least two receiving areas (4) are arranged in the vertical direction above one another.

2. Apparatus according to Claim 1, **characterised in that** holding elements for the tyre (1) can be hydraulically clamped relative to one another.

3. Apparatus according to one of Claims 1 and 2, **characterised in that** the receiving device (3) can be loaded and unloaded from only one side.

4. Apparatus according to one of Claims 1 to 3, **characterised in that** the loading as well as unloading is carried out with a modified press unloader.

5. Apparatus according to one of Claims 1 to 4, **characterised in that** the holding elements are configured as rim plates (5, 6).

6. Apparatus according to one of Claims 1 to 5, **characterised in that** one of the holding elements is arranged so as to be stationary and the other so as to be positionable.

7. Apparatus according to one of Claims 1 to 6, **characterised in that** a compressed-gas supply to an interior of the tyre (1) is effected through the stationarily arranged holding element.

8. Apparatus according to one of Claims 1 to 7, **characterised in that** the tyre (1) can be subjected to a prestressing pressure in a first process step via a valve arrangement (13).

9. Apparatus according to one of Claims 1 to 7, **characterised in that** the tyre (1) can be subjected to a main pressure in a second process step via a valve arrangement (14).

## Revendications

1. Dispositif avec un dispositif de réception (3) pour le post-traitement de pneumatiques (1), qui, après une vulcanisation de leur matière élastomère, sont soumis à une pression interne d'un gaz protecteur et refroidis, dans lequel le dispositif de réception (3) est conçu pour maintenir les pneumatiques (1) et pour étanchéifier un espace intérieur des pneumatiques, et est relié à un système d'alimentation en gaz comprimé, ainsi que dans lequel le dispositif de réception (3) présente au moins deux sections de réception (4) fixes, pour au moins deux pneumatiques (1), et dans lequel au moins une entrée des pneumatiques (1) est effectuée en utilisant un système de maniement(19) positionnable, **caractérisé en ce que** les deux sections de réception (4) au moins prévues sont disposées à l'aplomb l'une au-dessus de l'autre.

2. Dispositif selon la revendication 1, **caractérisé en ce que** les éléments de maintien, prévus pour les pneumatiques (1), sont contraints hydrauliquement les uns par rapport aux autres.

3. Dispositif selon l'une des revendications 1 ou 2, **caractérisé en ce que** le dispositif de réception (3) ne peut être chargé et déchargé que d'un côté.

4. Dispositif selon l'une des revendications 1 à 3, **caractérisé en ce que** le chargement tout comme le déchargement est exécuté avec un déchargeur de presse modifié.

5. Dispositif selon l'une des revendications 1 à 4, **caractérisé en ce que** les éléments de maintien sont conçus sous la forme d'une jante (5, 6).

6. Dispositif selon l'une des revendications 1 à 5, **caractérisé en ce que** l'un des éléments de maintien est installé fixement et que l'autre peut être positionné.

7. Dispositif selon l'une des revendications 1 à 6, **caractérisé en ce qu'**une amenée de gaz comprimé dans un espace intérieur du pneumatique (1) est effectuée à travers l'élément de maintien fixe.

8. Dispositif selon l'une des revendications 1 à 7, **caractérisé en ce que** le pneumatique (1) est soumis, au cours d'une première phase du processus, à une pression de précontrainte, par l'intermédiaire d'un agencement de soupapes (13).

9. Dispositif selon l'une des revendications 1 à 7, **caractérisé en ce que** le pneumatique (1), est soumis, au cours d'une deuxième phase du processus, à une pression principale, par l'intermédiaire d'un agencement de soupapes (14).
